# FASCICULE DE BREVET EUROPEEN

(11) **EP 3 387 846 B1**
(45) Date de publication et mention de la délivrance du brevet: **07.08.2019**
(21) Numéro de dépôt: 16819980.0
(22) Date de dépôt: 06.12.2016
(51) Int. Cl.: H04W 4/00, H04L 29/06, H04W 12/12

(54) **PROCEDE DE SECURISATION D'UN TERMINAL MOBILE ET TERMINAL CORRESPONDANT**
VERFAHREN ZUR SICHERUNG EINES MOBILEN ENDGERÄTS UND ZUGEHÖRIGES ENDGERÄT
METHOD OF SECURING A MOBILE TERMINAL AND CORRESPONDING TERMINAL

(30) Priorité: 07.12.2015 FR 1561935
(43) Date de publication de la demande: 17.10.2018
(73) Titulaire: Orange, 75015 Paris (FR)
(72) Inventeur: ALLAL, Imed, 22300 Lannion (FR)
(86) Numéro de dépôt international: PCT/FR2016/053216
(87) Numéro de publication internationale: WO 2017/098127

(56) Documents cités:
- CN-C- 100 362 884
- US-A1- 2007 077 912
- US-A1- 2011 087 782

## Description

### Domaine de l'invention

La présente invention se rapporte au domaine des télécommunications. L'invention concerne un procédé de sécurisation d'un terminal mobile apte à communiquer avec un réseau de télécommunication.

Le réseau de télécommunication est un réseau standardisé par exemple par le 3GPP (LTE, LTE-Adv, etc), GSM, etc) qui permet l'établissement de communications entre des terminaux aussi bien mobiles que fixes.

Depuis le standard GSM, les terminaux mobiles ont évolué de manière très conséquente pour devenir des téléphones intelligents ou smartphones. Ils sont ainsi équipés d'écran de très bonne qualité, de processeurs rapides et de systèmes d'exploitation permettant des utilisations variées avec une consommation toujours croissante d'images vidéo.

Ces objets portables sont devenus des objets de grande valeur et souvent convoités.

### Art antérieur

Pour lutter contre le vol des smartphones, il est connu des applications logicielles telles que les produits commerciaux Lookout ou Findmymobile qui permettent de géo-localiser le terminal perdu ou voler. L'application indique sur une carte affichée sur un écran le lieu qu'elle a déterminé comme étant celui où devrait se situer le terminal. Cette détermination est obtenue en recherchant dans le réseau l'identifiant unique, IMEI (International Mobile Equipement Identity selon la terminologie anglosaxonne) et sa localisation associée. Cet identifiant est en effet nécessaire dans les mécanismes d'authentification mis en oeuvre à chaque initialisation d'une communication. Le réseau garde une trace de cet identifiant à chaque fois que le terminal communique et dès que sa communication est basculée sur une nouvelle station de base lors d'un déplacement du terminal mobile.

Toutefois, ces applications comportent des failles puisque l'identifiant IMEI peut être modifié sous condition de manipulations particulières du terminal ou en utilisant des applications disponibles sur l'Internet. En attribuant un nouveau identifiant IMEI, le voleur échappe à la géolocalisation du terminal via des applications telles que Lookout ou Findmymobile.

Les documents US2011/087782, US2007/077912 et CN 100 362 884 sont considérés comme l'état de la technique.

### Exposé de l'invention

L'invention a pour objet un procédé de sécurisation d'un terminal mobile apte à communiquer avec un premier réseau de télécommunication. Le procédé comprend la transmission périodique d'un identifiant unique depuis le terminal et jusqu'à un réseau coeur du premier réseau de télécommunication via un canal de contrôle basé sur un deuxième réseau de télécommunication de type basse consommation d'énergie. L'invention a en outre pour objet un procédé de sécurisation d'un terminal mobile apte à communiquer avec un premier réseau de télécommunication tel que le procédé comprend la transmission périodique d'un identifiant unique depuis une mémoire dédiée non modifiable du terminal et jusqu'à un réseau coeur du premier réseau de télécommunication via un canal de contrôle basé sur un deuxième réseau de télécommunication de type basse consommation d'énergie.

L'invention a en outre pour objet un terminal mobile comprenant une interface radio à un premier réseau de télécommunication. Le terminal comprend en outre :
- une interface sans fil apte à communiquer avec un deuxième réseau de télécommunication de type basse consommation d'énergie,
- une mémoire d'un identifiant unique du téléphone,
- un composant apte à piloter l'interface sans fil pour que l'identifiant mémorisé dans la mémoire soit émis de manière périodique via cette interface.

L'invention a en outre pour objet un terminal mobile comprenant une interface radio à un premier réseau de télécommunication. Le terminal comprend en outre formant un bloc inamovible :
- une interface sans fil apte à communiquer avec un deuxième réseau de télécommunication de type basse consommation d'énergie,
- une mémoire non modifiable dédiée à la sauvegarde d'un identifiant unique du téléphone,
- un composant apte à piloter l'interface sans fil pour que l'identifiant mémorisé dans la mémoire soit émis de manière périodique via cette interface,
- une alimentation autonome du bloc.

L'invention a en outre pour objet un système de télécommunication comprenant un premier réseau de télécommunication, un réseau coeur, un terminal mobile apte à communiquer avec le premier réseau. Le système comprend en outre un deuxième réseau de télécommunication de type basse consommation d'énergie pour transmettre jusqu'à réseau coeur un identifiant unique émis par le terminal. Le système est tel que le terminal est selon un objet précédent.

L'invention est donc une nouvelle solution pour lutter contre le vol des terminaux mobiles. Sa mise en oeuvre nécessite qu'elle soit intégrée dès la conception des terminaux de manière que le bloc fasse corps avec le terminal et ne puisse en aucun cas être extrait du terminal. Les éléments formant ce bloc peuvent par exemple être répartis à différents endroits du terminal et/ou être noyés dans la coque du terminal. L'alimentation des éléments du bloc est totalement séparée de l'alimentation du reste du terminal. Elle peut reposer sur une micro batterie qui fait partie du bloc et dont la durée de vie assure une autonomie compatible de la durée de vie moyenne d'un terminal. La séparation physique d'avec le reste des composants électronique du terminal garantie l'absence de faille de sécurité de type logiciel.

La mémoire non modifiable mémorise un identifiant unique du terminal, ce peut être l'IMEI attribué à l'origine au terminal. Cet identifiant peut tout aussi bien être un identifiant d'un nouveau type avec plus de caractères. Il est unique dans le sens où il n'est attribué qu'une fois; il permet de distinguer tout terminal mobile d'un autre terminal mobile. L'identifiant peut éventuellement être stocké sous forme cryptée. Cette mémoire n'est pas accessible des autres éléments du terminal en dehors du bloc, aussi bien en lecture qu'en écriture. Ainsi, même si une application logicielle est téléchargée sur le terminal elle ne pourra jamais modifier cet identifiant puisque le téléchargement s'effectue via l'interface radio au premier réseau de télécommunication et vers une mémoire modifiable (RAM par exemple) qui ne fait pas partie du bloc.

L'interface sans fil est apte à communiquer avec un deuxième réseau de télécommunication de type basse consommation d'énergie.

Le deuxième réseau de télécommunication de type basse consommation énergétique est utilisé comme canal de transport de l'identifiant. Cette transmission est sécurisée de par les caractéristiques techniques de ce réseau.

Le procédé s'applique par exemple lorsque le premier réseau de télécommunication est dit réseau mobile tel que 3G, 4G, 5G, etc et le deuxième réseau est un réseau de capteurs tel qu'un réseau de type LoRa ou Sigfox et plus généralement un réseau dit IoT (Internet of Things).

Selon un mode de réalisation du terminal, le bloc constitue un objet connecté d'un réseau LoRa.

Selon un mode de réalisation, le réseau coeur compare l'identifiant unique avec l'identifiant IMEI fourni par le terminal pour s'authentifier auprès du premier réseau, pour authentifier de nouveau ce mobile. Ceci permet de contrôler de manière centrale l'authenticité des terminaux et de mettre en place des mesures de lutte centralisée.

Selon un mode de réalisation, l'identifiant unique est comparé par le réseau coeur à un fichier de terminaux mobiles déclarés comme volés ou perdus. Le procédé permet de rapidement interdire l'usage du terminal reconnu comme volé ou perdu par le réseau coeur.

### Liste des figures

D'autres caractéristiques et avantages de l'invention apparaîtront plus clairement à la lecture de la description qui suit de modes de réalisation particuliers d'objets de l'invention, donnés à titre de simples exemples illustratifs et non limitatifs, et des dessins annexés suivants.
La figure 1 est un schéma d'un système de télécommunication selon l'invention.
La figure 2 est un schéma d'un terminal selon l'invention.

### Description de modes de réalisation de l'invention

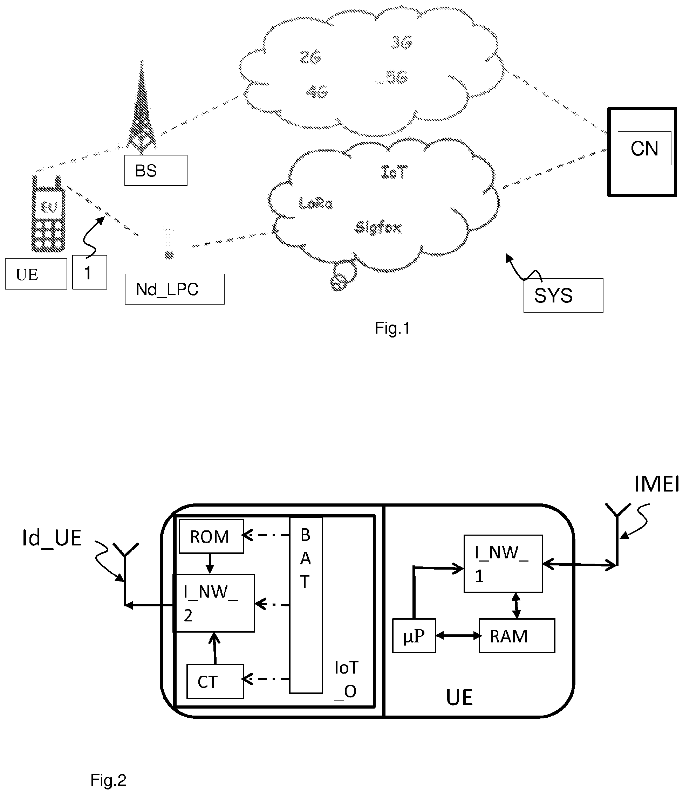

L'architecture associée au procédé de sécurisation est illustrée par la figure 1. Le système SYS de télécommunication illustré comprend :
- un réseau coeur CN,
- un réseau d'accès d'un premier réseau de télécommunication,
- une station de base BS du réseau d'accès,
- un deuxième réseau de télécommunication de type basse consommation d'énergie
- un terminal mobile UE équipé d'un objet connecté IoT_O.

Le premier réseau de télécommunication est par exemple un réseau mobile de type 2G, 3G, 4G, 5G, etc.

Le deuxième réseau est par exemple un réseau tel que défini par l'alliance LoRa ou proposé par l'opérateur Sigfox. Un tel réseau est parfois désigné par l'acronyme IoT (Internet of Things). Le réseau est constitué de noeuds Nd_LPC (Node Low Power Consumption) ainsi que de passerelles vers le réseau coeur. Les noeuds Nd_LPC sont équipés d'une interface radio avec une portée généralement plus importante que la portée des stations de base du réseau d'accès. Ce réseau peut ainsi couvrir une zone géographique importante avec peu de dispositifs. Un tel réseau est dédié à des communications à bas débit.

Les liens entre les noeuds du deuxième réseau et le réseau coeur sont de type standardisés connus et communément appelés « backaul » selon la terminologie anglo-saxonne. Il en est de même pour les liens entre les stations de base du réseau d'accès et le réseau coeur.

La portée radio des noeuds Nd_LPC peut être plus importante que celle des stations de base.

Le terminal mobile UE illustré par la figure 2 comprend de manière connue une interface radio I_NW_1 au réseau d'accès du premier réseau de télécommunication ainsi qu'un microprocesseur µP et de la mémoire modifiable RAM. Il peut ainsi établir des communications via ce réseau d'accès. Ce terminal est en outre équipé d'un objet connecté loT_O. Cet objet forme un bloc inamovible avec le corps du terminal ou avec sa carte mère. Cet objet comprend :
- une interface sans fil I_NW_2 apte à communiquer avec le deuxième réseau de télécommunication de type basse consommation d'énergie,
- une mémoire non modifiable ROM dédiée à la sauvegarde d'un identifiant unique du téléphone,
- un composant CT électronique apte à piloter l'interface I_NW_2 pour que l'identifiant mémorisé dans la mémoire ROM soit émis de manière périodique via cette interface,
- une alimentation BAT autonome de l'objet.

L'identifiant peut éventuellement être encapsulé dans un paquet ou message avant d'être émis. Les noeuds Nd_LPC reçoivent l'identifiant, Id_UE, et le transmettent au réseau coeur. Par ailleurs, le terminal mobile s'authentifie auprès du premier réseau à chaque fois qu'il établit une nouvelle communication. Cette authentification est basée sur l'identifiant IMEI associé au terminal et se déroule selon des mécanismes connus qui sont généralement spécifiés dans une spécification technique du standard de télécommunication. Le réseau coeur peut ainsi récupérer auprès du premier réseau soit l'identifiant IMEI, soit une image de cet identifiant IMEI. Il peut ainsi comparer ces données avec l'identifiant du terminal Id_UE et déterminer si l'identifiant IMEI fourni est original, c'est-à-dire identique à l'identifiant ou s'il a été modifié c'est-à-dire différent de l'identifiant. Si l'identifiant IMEI fourni a été modifié il y a une probabilité très importante que le terminal soit utilisé de manière frauduleuse par exemple suite à un vol. Le réseau coeur peut comparer l'identifiant du terminal Id_UE avec un fichier de terminaux déclarés comme volés ou perdus.

Le réseau coeur peut récupérer une information de localisation du terminal, via le premier réseau par des mécanismes connus : GPS du téléphone, identification de la station de base, etc. Selon un mode de réalisation, le réseau coeur peut récupérer une information de localisation du terminal, via le deuxième réseau. Un premier mécanisme de localisation du terminal peut-être basé sur une triangulation entre plusieurs noeuds Nd_LPC qui reçoivent l'émission périodique du même terminal. Ceci nécessite un déploiement suffisant de noeuds pour mettre en oeuvre cette triangulation. Un deuxième mécanisme de localisation du terminal mobile peut-être basé sur la récupération de la position GPS de ce terminal par le noeud via une interface du terminal adaptée au deuxième réseau de télécommunication. Cette interface est différente de celle qui émet l'identifiant pour conserver une séparation totale entre la mémoire de l'identifiant et le reste du terminal dans l'éventualité où le reste du terminal à accès à la position GPS.

Le réseau coeur peut ainsi localiser sur une carte un terminal volé et transmettre une telle information à un service de police pour retrouver ce terminal avec ses informations.

Selon une utilisation, le premier réseau de télécommunication est un réseau dit 5G qui fait l'objet de travaux de normalisation au sein du 3GPP (LTE-A).

## Revendications

1. Procédé (1) de sécurisation d'un terminal mobile (UE) apte à communiquer avec un premier réseau de télécommunication (20, 3G, 4G, 5G), **caractérisé en ce qu'**il comprend la transmission périodique d'un identifiant unique du terminal, depuis le terminal et jusqu'à un réseau coeur du premier réseau de télécommunication via un canal de contrôle basé sur un deuxième réseau (LoRa, IoT) de télécommunication de type basse consommation d'énergie.

2. Procédé (1) selon la revendication 1, comprenant en outre la comparaison par le réseau coeur de l'identifiant unique avec l'identifiant IMEI fourni par le terminal pour s'authentifier auprès du premier réseau, pour authentifier de nouveau ce terminal.

3. Procédé (1) selon la revendication 1, dans lequel l'identifiant unique est comparé par le réseau coeur à un fichier de terminaux mobiles déclarés comme volés ou perdus.

4. Procédé selon l'une des revendications précédentes selon lequel la transmission de l'identifiant unique est faite depuis une mémoire dédiée non modifiable du terminal.

5. Terminal mobile (UE) comprenant une interface radio à un premier réseau de télécommunication, **caractérisé en ce qu'**il comprend en outre:
- une interface sans fil (I_NW_2) apte à communiquer avec un deuxième réseau (LoRa, IoT) de télécommunication de type basse consommation d'énergie,
- une mémoire (ROM) pour mémoriser un identifiant unique du terminal.
- un composant apte à piloter l'interface (I_MW_2) pour que l'identifiant mémorisé dans la mémoire (ROM) soit émis de manière périodique via cette interface.

6. Terminal mobile (UE) selon la revendication précédente comprenant en outre une alimentation. (BAT) autonome d'un bloc formé de l'interface sans fil apte à communiquer avec le deuxième réseau, la mémoire, le composant et l'alimentation et tel que la mémoire est non modifiable et dédiée à la sauvegarde de l'identifiant.

7. Système (SYS) de télécommunication comprenant un premier réseau de télécommunication (3G, 4G, 5G), un réseau coeur (CN), un terminal mobile (UE) apte à communiquer avec le premier réseau, **caractérisé en ce que** le terminal comprend en outre :
- une interface sans fil apte à communiquer avec un deuxième réseau (LoRa, IoT) de télécommunication de type basse consommation d'énergie,
- une mémoire pour mémoriser un identifiant unique du terminal,
- un composant apte à piloter l'interface (I_NW_2) pour que l'identifiant mémorisé dans la mémoire (ROM) soit émis de manière périodique via cette interface et **caractérisé en ce que** le système comprend en outre :
- le deuxième réseau de télécommunication, de type basse consommation d'énergie pour transmettre jusqu'au réseau coeur l'identifiant unique émis par le terminal.

8. Système (SYS) de télécommunication selon la revendication précédente tel que le terminal comprend en outre une alimentation (BAT) autonome d'un, bloc formé de l'interface sans fil apte à communiquer avec le deuxième réseau, la mémoire, le composant et l'alimentation et tel que la mémoire est non modifiable et dédiée à la sauvegarde de l'identifiant,

## Claims

1. Method (1) of securing a mobile terminal (UE) capable of communicating with a first telecommunication network (2G, 3G, 4G, 5G), **characterized in that** it comprises the periodic transmission of a unique identifier of the terminal, from the terminal to a core network of the first telecommunication network via a control channel based on a second telecommunication network (LoRa, IoT) of a low energy consumption type.

2. Method (1) according to Claim 1, further comprising the comparison by the core network of the unique identifier with the IMEI identifier provided by the terminal for authentication with the first network, for re-authenticating this terminal.

3. Method (1) according to Claim 1, in which the unique identifier is compared by the core network to a file of mobile terminals reported as stolen or lost.

4. Method according to one of the preceding claims, according to which the transmission of the unique identifier is performed from an unmodifiable dedicated memory of the terminal.

5. Mobile terminal (UE) comprising a radio interface to a first telecommunication network, **characterized in that** it further comprises:
- a wireless interface (I_NW_2) capable of communicating with a second telecommunication network (LoRa, IoT) of a low energy consumption type,
- a memory (ROM) for storing a unique identifier of the terminal,
- a component capable of controlling the interface (I_NW_2) so that the identifier stored in the memory (ROM) is transmitted periodically via this interface.

6. Mobile terminal (UE) according to the preceding claim further comprising an autonomous power supply (BAT) of a unit formed of the wireless interface capable of communicating with the second network, the memory, the component and the power supply and such that the memory is unmodifiable and dedicated to backing up the identifier.

7. Telecommunication system (SYS) comprising a first telecommunication network (3G, 4G, 5G), a core network (CN), a mobile terminal (UE) capable of communicating with the first network, **characterized in that** the terminal further comprises:
- a wireless interface capable of communicating with a second telecommunication network (LoRa, IoT) of a low energy consumption type,
- a memory for storing a unique identifier of the terminal,
- a component capable of controlling the interface (I_NW_2) so that the identifier stored in the memory (ROM) is transmitted periodically via this interface
and **characterized in that** the system further comprises:
- the second telecommunication network of a low energy consumption type for transmitting to the core network the unique identifier transmitted by the terminal.

8. Telecommunication system (SYS) according to the preceding claim such that the terminal further comprises an autonomous power supply (BAT) of a unit formed of the wireless interface capable of communicating with the second network, the memory, the component and the power supply and such that the memory is unmodifiable and dedicated to backing up the identifier.

## Patentansprüche

1. Verfahren (1) zur Sicherung eines mobilen Endgerätes (UE), das in der Lage ist, mit einem ersten Telekommunikationsnetz (2G, 3G, 4G, 5G) zu kommunizieren, **dadurch gekennzeichnet, dass** es die periodische Übertragung einer eindeutigen Kennung des Endgerätes vom Endgerät aus zu einem Kernnetz des ersten Telekommunikationsnetzes über einen Steuerkanal basierend auf einem zweiten Telekommunikationsnetz (LoRa, IoT) des Typs mit niedrigem Energieverbrauch umfasst.

2. Verfahren (1) nach Anspruch 1, welches außerdem den Vergleich, durch das Kernnetz, der eindeutigen Kennung mit der IMEI-Kennung, die von dem Endgerät geliefert wird, um sich im ersten Netz zu authentifizieren, umfasst, um dieses Endgerät erneut zu authentifizieren.

3. Verfahren (1) nach Anspruch 1, wobei die eindeutige Kennung durch das Kernnetz mit einer Datei von mobilen Endgeräten verglichen wird, die als gestohlen oder verloren gemeldet wurden.

4. Verfahren nach einem der vorhergehenden Ansprüche, gemäß dem die Übertragung der eindeutigen Kennung aus einem nicht veränderbaren dedizierten Speicher des Endgerätes erfolgt.

5. Mobiles Endgerät (UE), welches eine Funkschnittstelle zu einem ersten Telekommunikationsnetz umfasst, **dadurch gekennzeichnet, dass** es außerdem umfasst:
- eine drahtlose Schnittstelle (I_NW_2), die in der Lage ist, mit einem zweiten Telekommunikationsnetz (LoRa, IoT) des Typs mit niedrigem Energieverbrauch zu kommunizieren,
- einen Speicher (ROM) zum Speichern einer eindeutigen Kennung des Endgerätes,
- eine Komponente, die in der Lage ist, die Schnittstelle (I_NW_2) zu steuern, damit die in dem Speicher (ROM) gespeicherte Kennung periodisch über diese Schnittstelle gesendet wird.

6. Mobiles Endgerät (UE) nach dem vorhergehenden Anspruch, welches außerdem eine autonome Stromversorgung (BAT) eines Blockes umfasst, der von der drahtlosen Schnittstelle, die in der Lage ist, mit dem zweiten Netz zu kommunizieren, dem Speicher, der Komponente und der Stromversorgung gebildet wird, und wobei der Speicher nicht modifizierbar und für die Speicherung der Kennung bestimmt ist.

7. Telekommunikationssystem (SYS), welches ein erstes Telekommunikationsnetz (3G, 4G, 5G), ein Kernnetz (CN) und ein mobiles Endgerät (UE), das in der Lage ist, mit dem ersten Netz zu kommunizieren, umfasst, **dadurch gekennzeichnet, dass** das Endgerät außerdem umfasst:
- eine drahtlose Schnittstelle, die in der Lage ist, mit einem zweiten Telekommunikationsnetz (LoRa, IoT) des Typs mit niedrigem Energieverbrauch zu kommunizieren,
- einen Speicher zum Speichern einer eindeutigen Kennung des Endgerätes,
- eine Komponente, die in der Lage ist, die Schnittstelle (I_NW_2) zu steuern, damit die in dem Speicher (ROM) gespeicherte Kennung periodisch über diese Schnittstelle gesendet wird,
und **dadurch gekennzeichnet, dass** das System außerdem umfasst:
- das zweite Telekommunikationsnetz des Typs mit niedrigem Energieverbrauch zum Übertragen der von dem Endgerät gesendeten eindeutigen Kennung bis zum Kernnetz.

8. Telekommunikationssystem (SYS) nach dem vorhergehenden Anspruch, wobei das Endgerät außerdem eine autonome Stromversorgung (BAT) eines Blockes umfasst, der von der drahtlosen Schnittstelle, die in der Lage ist, mit dem zweiten Netz zu kommunizieren, dem Speicher, der Komponente und der Stromversorgung gebildet wird, und wobei der Speicher nicht modifizierbar und für die Speicherung der Kennung bestimmt ist.
